# EUROPEAN PATENT SPECIFICATION

(11) **EP 3 490 732 B1**
(45) Date of publication and mention of the grant of the patent: **31.08.2022**
(21) Application number: 17740418.3
(22) Date of filing: 24.07.2017
(51) Int. Cl.: B08B 3/02, B08B 9/00, B25J 11/00, B67C 3/00, B05B 13/04, B08B 5/02

(54) **MACHINE FOR FILLING BOTTLES AND THE LIKE COMPRISING HANDLING DEVICE FOR WASHING AND SANITISING**
MASCHINE ZUM FÜLLEN VON FLASCHEN UND DERGLEICHEN MIT HANDHABUNGSVORRICHTUNG ZUM WASCHEN UND DESINFIZIEREN
MACHINE POUR LE REMPLISSAGE DE BOUTEILLES ET SIMILAIRES COMPRENANT UN DISPOSITIF DE MANIPULATION POUR LE LAVAGE ET LA DÉSINFECTION

(30) Priority: 26.07.2016 IT 201600078037
(43) Date of publication of application: 05.06.2019
(73) Proprietor: I.M.A. Industria Macchine Automatiche S.p.A., 40064 Ozzano dell'Emilia - Bologna (IT)
(72) Inventor: TREBBI, Claudio, 40064 Ozzano dell'Emilia (BO) Italy (IT); GABUSI, Gabriele, 40064 Ozzano dell'Emilia (BO) Italy (IT)
(74) Representative: Paglia, Pietro
(86) International application number: PCT/EP2017/068658
(87) International publication number: WO 2018/019775

(56) References cited:
- EP-A1- 0 374 586
- EP-A2- 2 218 521
- DE-A1-102010 045 269
- DE-U1-202007 006 113
- JP-A- 2012 116 495

## Description

This invention relates to a machine for filling bottles, cartridges, syringes and the like.

In the pharmaceutical sector, products and substances in liquid and/or powder form can be properly packaged in special containers, often suitable for containing a single dose, in order to facilitate their administration to patients.

Such products and substances are therefore packaged in specific bottles, vials, cartridges (such as, for example, carpules used in syringes intended for the administration of local anaesthetics), syringes (such as ready-to-use syringes used for many miscellaneous applications) and similar products.

Known procedures for filling containers such as bottles, cartridges, syringes and the like require the provision of tubs containing suitable nests within which the containers are neatly arranged.

The tubs, nests and containers are of a standard type, manufactured by their suppliers, generally differing from those used for filling and constituting the first dimensional and structural requirement necessary for filling and sealing machines.

Known types of machines involving the picking of the nest, within which many empty, sterile containers are stored, from its tub and its transfer to an operating area where at least one single container is taken at a time, the container is filled with the specific substance required and its opening is sealed to isolate the contents from the outside environment.

The handling of the nests is normally carried out by multi-axis handling devices, which take them from a conveyor belt and transfer them, from time to time, to a specific operating area (where the filling, weighing or sealing, etc. is to be performed).

The multi-axis handling devices have multiple grooves, sites and undercuts where dust and residues that are difficult to remove can accumulate.

It is, however, essential that all parts of the machine used for packaging drugs can be easily and fully subjected to cleaning and sanitising procedures.

Known types of machines provide for the possibility for staff to access the inside of the machine, using appropriate protective sleeves, to perform cleaning procedures. The precision of such procedures is often insufficient and does not enable the complete removal of dust and residues, ensuring the proper sanitisation of the chamber of the machines, in which the container-filling procedures are carried out. JP 2012 116495 describes a filling device in which a robot is used to carry out washing procedures. This robot has a conduit placed at least partially inside the robot and the latter is equipped with a spray nozzle. This configuration of the known procedure makes it difficult to clean the washing conduit and also complicates the procedures for replacing the washing conduit. Further examples of these machines are known from EP2218521 A, DE102010045269A1 and EP0374686A1.

The main aim of this invention is to resolve the problems mentioned above, by proposing a machine for filling bottles, cartridges, syringes and the like, suitable for automatically performing cleaning and sanitising procedures, without the need for staff to intervene from the outside.

Within the scope of this function, one of the purposes of this invention is to propose a machine for filling bottles, cartridges, syringes and the like, that do not require any access to the operating chamber of instruments, tools and/or staff to carry out cleaning and sanitising procedures.

Another purpose of this invention is to propose a machine for filling bottles, cartridges, syringes and the like that enables short-term cleaning procedures to be performed on a regular basis, without requiring long machine shut-down times.

A further purpose of this invention is to create a relatively simple, practical, safe-to-use and cost-effective machine for filling bottles, cartridges, syringes and the like.

This aim and these purposes are achieved by a machine for filling bottles, cartridges, syringes and the like, generally defined as containers, in accordance with claim 1.

Additional features and advantages of this invention will be further detailed in the description of a preferred, but not exclusive, form of execution of the machine for filling bottles, cartridges, syringes and the like according to the invention, illustrated in the accompanying drawings, by way of a non-limiting example, in which:

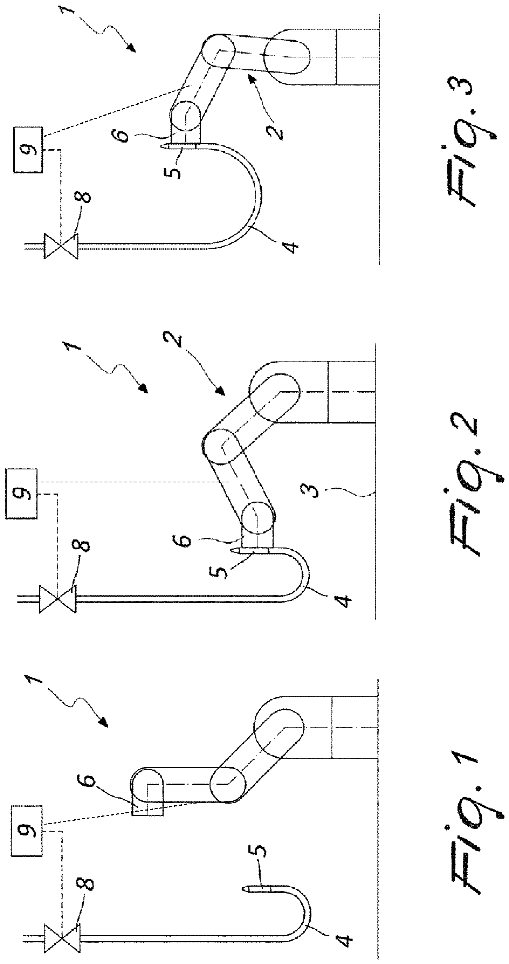

Figure 1 is a cross-sectional side view of a portion of the machine for filling bottles, cartridges, syringes and the like, according to the invention, in a first operational configuration;
Figure 2 is a cross-sectional side view of the portion shown in figure 1 in a second operational configuration;
Figure 3 is a cross-section side view of the portion shown in figure 1 in a third operational configuration;

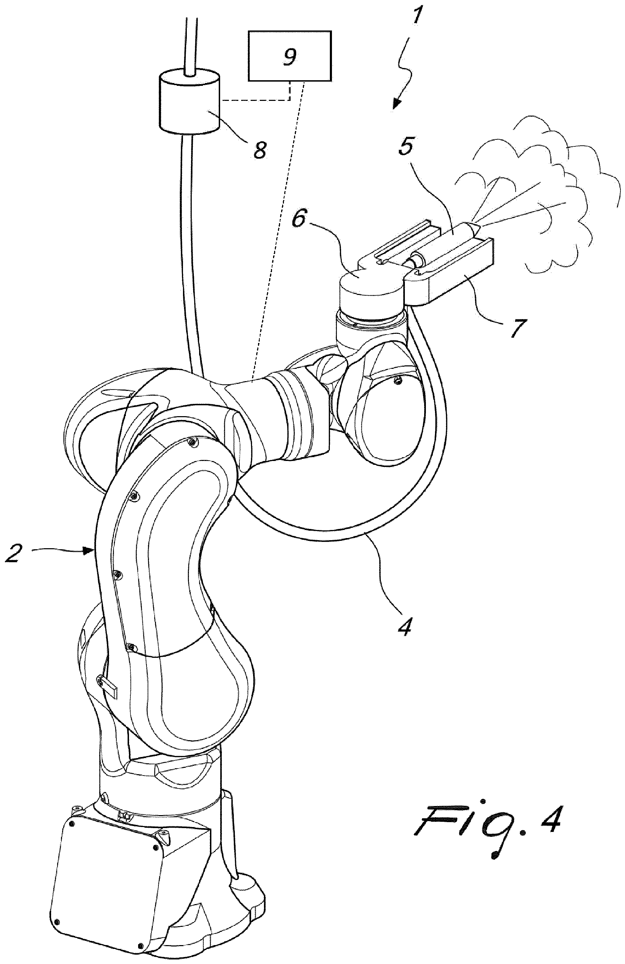

Figure 4 is an axonometric view of a possible portion of the machine for filling bottles, cartridges, syringes and the like, according to the invention in a third operational configuration.

With specific reference to these figures, the number 1 generally refers to a machine for filling bottles, cartridges, syringes and the like. Generally, the machine 1 can be suitable for carrying out all the procedures related to filling containers, such as bottles, cartridges, syringes, vials, carpules and the like.

These procedures may require cleaning each container, weighing (before and after filling), sealing (with specific caps or other means of closure) and the provision of fastening rings for the closure caps. It is already specified that the machine 1 may also carry out just one of the procedures mentioned, as it may carry out other procedures, as required by the specific type of container that needs to be processed. The machine 1, according to this invention, comprises a chamber with an inlet and outlet, through which the containers flow into the chamber; the chamber also comprises an intermediate operational area in which the containers are subjected to specific processing procedures, such as those listed above.

The machine 1, according to this invention, comprises at least one handling device 2 with several degrees of freedom, automatically controlled and reprogrammable. The handling device 2 is preferably secured to a frame 3 of the machine 1.

The machine 1 also comprises at least one conduit 4 for washing and sanitising fluids.

The conduit 4 is entirely located outside of the handling device 2 and has a dispensing nozzle 5 directly attached to its free end.

The technical advantages of this invention lie specifically in the fact that the dispensing nozzle 5 is configured to be joined to an adjustable end 6 of the handling device 2 for washing and sanitising the chamber and the containers contained therein.

In practice, the conduit 4 is not even partially integrated in the handling device 2, as the conduit 4 and the dispensing nozzle 5 are completely independent of the handling device.

Therefore, it is easy to change the conduit 4 and type of dispensing nozzle 5 when necessary. It is therefore sufficient to join the dispensing nozzle 5 to the adjustable end 6 of the handling device 2. The conduit 4 is also easy to wash and replace, as it does not pass inside the handling device 2.

With specific reference to a realistic and practical solution that can be applied, represented, by way of a non-limiting example, by the attached figures, the at least one conduit 4 may include a flexible portion, protruding into the chamber.

According to the invention, the dispensing nozzle 5 has shape and dimensions matching to those of clamping elements 7 arranged at the adjustable end 6 of said handling device 2. I this way the dispensing nozzle 5 can be removed from the clamping elements 7 when required.

More specifically, it should be noted that the flexible portion of the conduit 4 can be conveniently projected into the chamber through its upper wall (the ceiling of the chamber), from above the handling device 2.

In this way, it will be possible to have conduits 4 with a shorter flexible portion, thus reducing the overall costs and ensuring an optimal execution of washing and sanitising procedures.

According to an alternative solution, the conduit 4 can run along the outer surface of the handling device 2, ensuring that, in the articulated zone of the handling device 2, appropriate joining elements are provided.

The conduit 4 can comprise an automatic valve units 8 for controlling the flow of washing and sanitising fluids.

In order to ensure the optimal operation of the machine 1 according to the invention, at least one handling device 2 and the valve units 8 are controlled by a control and management processor 9.

Optionally, the handling device 2 can be coupled to at least two dispensing nozzles 5 attached directly to a free end of a respective conduit 4. In other words, there are a first conduit with a first dispensing nozzle and a second conduit with a second dispensing nozzle, both the first and the second dispensing nozzles are coupled to the same adjustable end 6 of the handling device 2.

In this way, it will also be possible to dispense the fluid into very wide, solid corner, so that the handling device 2, by changing the direction of its adjustable end 6, can easily supply a jet of liquid within the chamber.

By way of example, the washing and sanitising fluids can preferably be selected from water, water vapour, hydrogen peroxide, hydrogen peroxide vapours, solvents, solvent vapours, ozone-containing gas mixtures, liquid mixtures, gas mixtures and similar substances.

In order to ensure that the machine 1 can operate with any type of container, including containers received in a nest, it should be noted that the handling device 2 can preferably be an anthropomorphic robot.

Anthropomorphic robots are highly versatile and allow for very simple change-over procedures, such as, for example, by merely reprogramming their work cycles.

At the same time, it should be noted that some anthropomorphic robots are equipped with appropriate sensors that also enable self-learning, further simplifying the start-up and execution of the procedures required by the machine 1 according to this invention. Advantageously, this invention resolves the problems outlined at the beginning, by providing a machine 1 for filling bottles, cartridges, syringes and the like, suitable for automatically performing cleaning and sanitising procedures, without the need for staff to intervene. Effectively, the machine 1 for filling bottles, cartridges, syringes and the like does not require any access to the chamber by instruments, tools and/or staff to carry out cleaning and sanitising procedures, as it can be automatically controlled.

Conveniently, the machine 1, according to this invention, allows for short-term cleaning procedures to be carried out, which can be performed on a regular basis, without requiring long machine shut-down times.

This invention effectively provides a machine 1 for filling bottles, cartridges, syringes and the like, with a relatively simple, practical and cost-effective procedure: these features make the machine 1, according to this invention, a safe-to-use innovation.

## Claims

1. Machine for filling bottles, cartridges, syringes and the like, generally defined as containers, the machine comprising a chamber with an inlet and outlet for containers and at least one intermediate operating station in which the containers are subjected to specific processing, further comprising at least one handling device (2) with several degrees of freedom, automatically controlled and reprogrammable and at least one conduit (4) for washing and sanitising fluids, and a dispensing nozzle (5) attached directly to a free end of the conduit (4), said dispensing nozzle (5) being configured to be joined to an adjustable end (6) of the at least one handling device (2) for washing and sanitising said chamber and the containers contained therein; **characterized in that**
said at least one conduit (4) is entirely located outside of said handling device (2) and **in that** it has a flexible portion protruding inside said chamber, said dispensing nozzle (5) having shape and dimensions matching to those of clamping elements (7) arranged at the adjustable end (6) of said handling device (2), so that a removable coupling between said dispensing nozzle (5) and said clamping elements (7) is achieved.

2. Machine according to claim 1, wherein said flexible portion of the conduit (4) protrudes into said chamber from an upper wall of the chamber, from above the handling device (2).

3. Machine according to any one of the preceding claims, wherein the at least one conduit (4) is stably coupled to the handling device (2), with said dispensing nozzle (5) joined to the adjustable end (6) of said handling device (2).

4. Machine according to any one of the preceding claims, wherein at least one conduit (4) comprises an automatic valve unit (8) for controlling the flow of washing and sanitising fluids.

5. Machine according to claim 4, wherein the at least one handling device (2) and said valve units (8) are controlled by a control and management processor (9).

6. Machine according to any one of the preceding claims, wherein the least one handling device (2) is coupled to at least two dispensing nozzles (5) attached directly to a free end of a respective conduits (4).

7. Machine according to any one of the preceding claims, wherein said washing and sanitising fluids are selected from water, water vapour, hydrogen peroxide, hydrogen peroxide vapours, solvents, solvent vapours, ozone-containing gas mixtures, liquid mixtures, gas mixtures and similar substances.

8. Machine according to any one of the preceding claims, wherein the at least one handling device (2) is an anthropomorphic robot.

9. Machine according to any one the preceding claims, wherein said handling device (6) is secured to a frame (3) of the machine (1).

## Patentansprüche

1. Maschine zum Füllen von Flaschen, Patronen, Spritzen und dergleichen, die allgemein als Behälter definiert sind, wobei die Maschine eine Kammer mit einem Einlass und einem Auslass für Behälter und mindestens eine dazwischenliegende Arbeitsstation aufweist, in der die Behälter einer spezifischen Verarbeitung unterzogen werden, und ferner aufweist:
mindestens eine Handhabungsvorrichtung (2) mit mehreren Freiheitsgraden, die automatisch gesteuert und umprogrammierbar ist, und mindestens eine Leitung (4) für Wasch- und Desinfektionsflüssigkeiten,
und eine Ausgabedüse (5), die direkt an einem freien Ende der Leitung (4) angebracht ist, wobei die Ausgabedüse (5) dazu eingerichtet ist, mit einem einstellbaren Ende (6) der mindestens einen Handhabungsvorrichtung (2) verbunden zu werden, um die Kammer und die darin enthaltenen Behälter zu waschen und zu desinfizieren; **dadurch gekennzeichnet, dass** die mindestens eine Leitung (4) vollständig außerhalb der Handhabungsvorrichtung (2) angeordnet ist und dass sie einen flexiblen Abschnitt aufweist, der in die Kammer hervortritt,
wobei die Ausgabedüse (5) eine Form und Abmessungen aufweist, die mit denen von Klemmelementen (7) übereinstimmen, die an dem einstellbaren Ende (6) der Handhabungsvorrichtung (2) angeordnet sind, so dass eine lösbare Verbindung zwischen der Ausgabedüse (5) und den Klemmelementen (7) erreicht wird.

2. Maschine nach Anspruch 1, wobei der flexible Abschnitt der Leitung (4) von einer oberen Wand der Kammer aus über die Handhabungsvorrichtung (2) in die Kammer hervortritt.

3. Maschine nach einem der vorhergehenden Ansprüche, wobei die mindestens eine Leitung (4) stabil mit der Handhabungsvorrichtung (2) verbunden ist, wobei die Ausgabedüse (5) mit dem einstellbaren Ende (6) der Handhabungsvorrichtung (2) verbunden ist.

4. Maschine nach einem der vorhergehenden Ansprüche, wobei mindestens eine Leitung (4) eine automatische Ventileinheit (8) zur Steuerung des Flusses von Wasch- und Desinfektionsflüssigkeiten aufweist.

5. Maschine nach Anspruch 4, wobei die mindestens eine Handhabungsvorrichtung (2) und die Ventileinheiten (8) von einem Steuer- und Verwaltungsprozessor (9) gesteuert werden.

6. Maschine nach einem der vorhergehenden Ansprüche, wobei die mindestens eine Handhabungsvorrichtung (2) mit mindestens zwei Ausgabedüsen (5) gekoppelt ist, die direkt an einem freien Ende einer jeweiligen Leitung (4) angebracht sind.

7. Maschine nach einem der vorhergehenden Ansprüche, wobei die Wasch- und Desinfektionsflüssigkeiten aus Wasser, Wasserdampf, Wasserstoffperoxid, Wasserstoffperoxiddämpfen, Lösungsmitteln, Lösungsmitteldämpfen, ozonhaltigen Gasgemischen, Flüssigkeitsgemischen, Gasgemischen und ähnlichen Substanzen ausgewählt sind.

8. Maschine nach einem der vorhergehenden Ansprüche, wobei die mindestens eine Handhabungsvorrichtung (2) ein anthropomorpher Roboter ist.

9. Maschine nach einem der vorhergehenden Ansprüche, wobei die Handhabungsvorrichtung (6) an einem Rahmen (3) der Maschine (1) befestigt ist.

## Revendications

1. Machine pour le remplissage de bouteilles, de cartouches, de seringues et similaires, généralement définies sous le terme de contenants, la machine comprenant une chambre avec une entrée et une sortie pour les contenants et au moins une station de fonctionnement intermédiaire dans laquelle les contenants sont soumis à un traitement spécifique, comprenant en outre au moins un dispositif de manipulation (2) avec plusieurs degrés de liberté, commandé automatiquement et reprogrammable et au moins un conduit (4) pour des fluides de lavage et de désinfection,
et une buse de délivrance (5) attachée directement à une extrémité libre du conduit (4), ladite buse de délivrance (5) étant configurée pour être jointe à une extrémité ajustable (6) de l'au moins un dispositif de manipulation (2) pour laver et désinfecter ladite chambre et les contenants contenus à l'intérieur ; **caractérisée en ce que** ledit au moins un conduit (4) est entièrement situé à l'extérieur dudit dispositif de manipulation (2) et **en ce qu'**il comporte une portion flexible faisant saillie à l'intérieur de ladite chambre, ladite buse de délivrance (5) ayant une forme et des dimensions concordant avec celles d'éléments de serrage (7) agencés au niveau de l'extrémité ajustable (6) dudit dispositif de manipulation (2), de façon à parvenir à un couplage amovible entre ladite buse de délivrance (5) et lesdits éléments de serrage (7).

2. Machine selon la revendication 1, dans laquelle ladite portion flexible du conduit (4) fait saillie dans ladite chambre depuis une paroi supérieure de la chambre, depuis le dessus du dispositif de manipulation (2).

3. Machine selon l'une quelconque des revendications précédentes, dans laquelle l'au moins un conduit (4) est couplé de façon stable au dispositif de manipulation (2), ladite buse de délivrance (5) étant jointe à l'extrémité ajustable (6) dudit dispositif de manipulation (2).

4. Machine selon l'une quelconque des revendications précédentes, dans laquelle au moins un conduit (4) comprend une unité de vanne automatique (8) pour commander l'écoulement de fluides de lavage et de désinfection.

5. Machine selon la revendication 4, dans laquelle l'au moins un dispositif de manipulation (2) et lesdites unités de vanne (8) sont commandés par un processeur de commande et de gestion (9).

6. Machine selon l'une quelconque des revendications précédentes, dans laquelle l'au moins un dispositif de manipulation (2) est couplé à au moins deux buses de délivrance (5) attachées directement à une extrémité libre d'un conduit (4) respectif.

7. Machine selon l'une quelconque des revendications précédentes, dans laquelle lesdits fluides de lavage et de désinfection sont choisis parmi l'eau, la vapeur d'eau, le peroxyde d'hydrogène, les vapeurs de peroxyde d'hydrogène, les solvants, les vapeurs de solvants, des mélanges de gaz contenant de l'ozone, des mélanges de liquides, des mélanges de gaz et des substances similaires.

8. Machine selon l'une quelconque des revendications précédentes, dans laquelle l'au moins un dispositif de manipulation (2) étant un robot anthropomorphe.

9. Machine selon l'une quelconque des revendications précédentes, dans laquelle ledit dispositif de manipulation (6) est arrimé à un cadre (3) de la machine (1).
